# EUROPEAN PATENT SPECIFICATION

(11) **EP 2 158 408 B1**
(45) Date of publication and mention of the grant of the patent: **14.12.2011**
(21) Application number: 08762917.6
(22) Date of filing: 16.06.2008
(51) Int. Cl.: F16B 33/02

(54) **THREADED CONNECTION WITH VARIABLE GAP**
GEWINDEVERBINDUNG MIT VARIABLEM SPALT
RACCORDEMENT FILETE A ESPACE VARIABLE

(30) Priority: 18.06.2007 ES 200701675
(43) Date of publication of application: 03.03.2010
(73) Proprietor: Biotechnology Institute, I Mas D, S.L., 01005 Vitoria (Álava) (ES)
(72) Inventor: ANITUA ALDECOA ,Eduardo, E-01005 Vitoria (ES)
(74) Representative: Urteaga Simarro, José Antonio
(86) International application number: PCT/IB2008/001595
(87) International publication number: WO 2008/155633

(56) References cited:
- DE-B- 1 608 626
- DE-U1- 29 620 020
- FR-A- 1 024 655
- GB-A- 569 581
- US-A1- 2002 197 130

## Description

### Field of the Invention

The invention relates to a threaded connection between a threaded male part and a threaded female part, applicable to all types of threaded connections, such as, for example, threaded connections between a dental implant and screw, the latter being used to retain an artificial tooth, etc..

### Prior Art

Conventional threaded connections between a male part (with a thread profile made up of a series of spires) and a female part (also with a thread profile made up of a series of spires, and in which the thread profile of the male part fits perfectly) have been designed so as not to present gaps, or in other words, so that the thread profiles of both parts fit each other perfectly. After analyzing these connections, the conclusion has been reached that the stress distribution on the spires during the useful life of the threaded connection makes some spires withstand greater tension than others. More specifically, the spires that withstand greater stress are the first spires, or in other words, the spires closest to the head of the screw, or what is the same, furthest away from the tip of the screw.

Some patents such as US3664540 and US2870668 are known, which describe threaded connections in which there is a gap between the thread profile of the external part (male) and the internal part (female) and the thread profile of the female part. The gap grows linearly in order to homogeneously distribute stress, or in other words, so that all of the spires withstand approximately the same tension.

However, this linear-growing gap does not allow controlling the stress distribution throughout the threaded connection, which would be interesting for certain applications in which threaded connections with different stress distributions would be desirable. In these certain applications, neither a traditional threaded connection (in which the first spires are under the most stress) nor a threaded connection as in US3664540 or US2870668 (in which all spires are under the same stress) might be the most appropriate. Instead, in these certain applications it will be interesting that the stress peak occurs in any of the spires of the threaded connection, even in the final spires. For example, in threaded connections used in aeronautics, the final spires must be the most burdened in order to ensure that the majority of the screw remains (and therefore continues working) in the event of breakage of the screw, ensuring that the threaded connection is maintained. Alternatively, it may also be interesting to design the threaded connection so that faults occur in the head of the screw and hence facilitate the extraction of the screw in the event that it breaks.

Document GB569581 shows a threaded connection with the features of the preamble of claim 1.

The invention aims to offer a design for a threaded connection which is appropriate for applications in which it is not necessary for the stress distribution to be homogeneous nor do the first spires need to be under the most stress.

### Brief Description of the Invention

The object of the invention is a threaded connection of a male part and a female part, both with a thread profile made up of spires, whereby the thread of the thread profile of the male part is different to the thread of the thread profile of the female part, there being a controlled gap between both parts. According to the invention, one of the two parts (male or female) presents a variable thread step. Therefore, the threaded connection between both parts presents a gap that varies in a non-linear manner (unlike the gaps in US3664540 and US2870668, in which the thread step of both parts is slightly different but always constant, creating a gap that varies linearly). By appropriately adjusting the specific design of the thread steps (and therefore the type of non-linear gap), it is possible to control the stress distribution throughout the threaded connection in accordance with the interests of each specific application. Therefore, the invention allows configuring or choosing the area of the threaded connection that is going to be under more stress, and therefore allows controlling in which area of the connection breakage will occur.

The variable thread step may either be in the male part or in the female part. It must be taken into account that if it is applied in the male part, it is generally an increasing thread step whilst if it is applied to the female part, it is generally a decreasing thread step. The other part will have a thread profile with a constant thread step.

It should be born in mind that the terms "increasing" and "decreasing" are used observing the threaded connection from the head towards the tip of the male part (the male part shall generally be a screw or similar).

The gap with non-linear variation presents a substantially n-grade parabolic, elliptic or polynomic variation. The choice of one type of gap or another depends on the application in which the invention is going to be used.

### Brief Description of the Figures

The details of the invention can be appreciated in the accompanying figures, which do not intend to limit the scope of the invention:
- Figure 1 shows a conventional threaded connection without gaps.
- Figure 2 shows a diagram of a threaded connection according to the invention.
- Figure 3 shows an enlarged view of several consecutive spires of the threaded connection of the previous figure.
- Figure 4 shows the stress distribution throughout the threaded connection in Figure 1.
- Figure 5 shows the stress distribution of the threaded connection in Figure 2.
- Figure 6 shows a graph of the stress with respect to the gap.
- Figure 7 shows a graph of the distribution of forces throughout the spires in a conventional threaded connection without a gap, in a conventional threaded connection with a linearly-increasing gap, and in the threaded connection according to the invention shown in Figure 2.
- Figure 8 shows a table detailing gap values of a conventional connection and of several embodiments of the invention.
- Figure 9 shows the graphic representation of the gaps in the previous figure.

### Detailed Description of the Invention

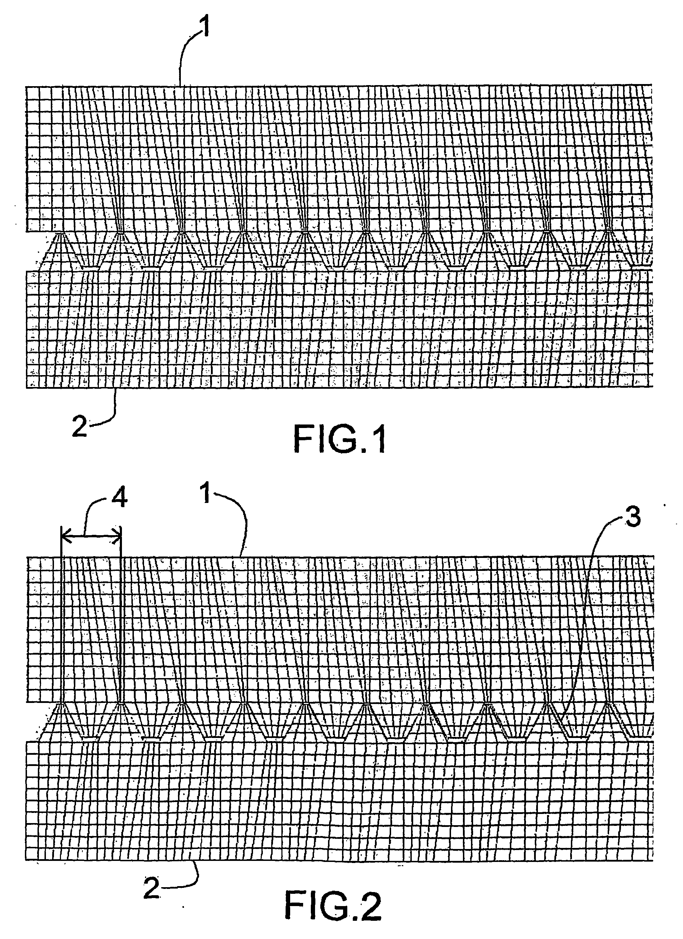

Figure 1 shows a conventional threaded connection between a female part (1) and a male part (2), in which there are no gaps between both parts (1, 2).

Figure 2 shows an embodiment of the threaded connection according to the invention, between a female part (1) and a male part (2), in which gaps (3) between both parts (1, 2) are formed as a result of the fact that the thread step (4) of the female part (1) and the thread step (4) of the male part (2) are different. According to the invention, the thread step (4) of one of the two parts (1, 2) increases from one spire to another in an inconstant manner. Therefore, the width of the gaps (3) increases in a non-linear way. In embodiment shown in the figure, it is the female part (1) that presents the increasing thread step (4) whilst the male part (2) presents the constant thread step (4). 'Thread step (4)' is understood to be the distance between one spire and the following spire in the thread profile.

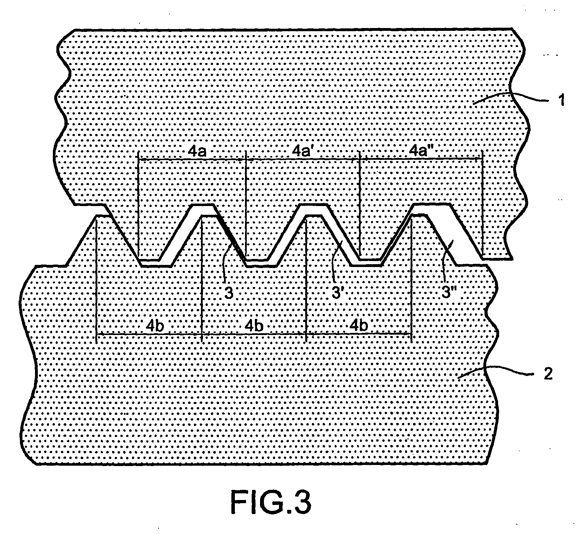

Figure 3 shows an enlarged view of various consecutive spires of the threaded connection between the female part (1) and the male part (2). The thread step (4b) of the male part (2) is fixed, whilst the thread step (4a, 4a', 4a") of the female part (1) increases in successive spires. Thread steps (4a, 4a', 4a", 4b) are such that the width of the gaps (3) presents a substantially parabolic, elliptic or n-grade polynomic variation.

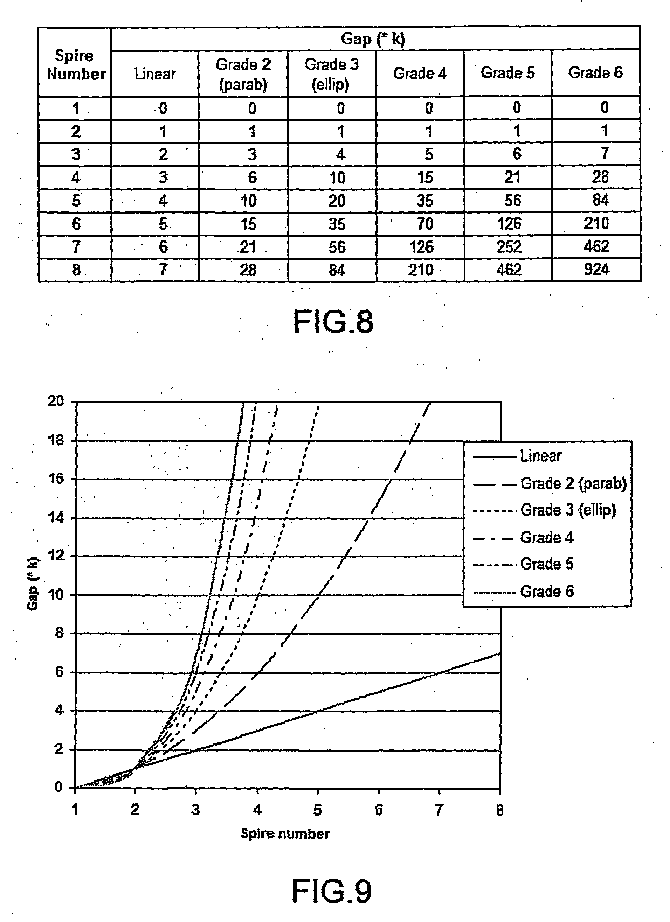

For the gap (3) to grow in a substantially parabolic manner, the thread step (4b) of the male part (2) is constant whilst the thread step (4a, 4a', 4a") of the female part (1) follows a linear function with respect to the spire number; i.e., the difference between a thread step and the previous thread step is a constant value. In other words, the graphic representation of the thread step of the female part (1) in accordance with the spire number is a straight line. For example, if the thread step (4b) of the male part (2) is a constant value 'p', the thread steps (4a, 4a', 4a") of the female part (1) are p+k, p+2k and p+3k respectively, where k is constant. Therefore, in this case the width of the gaps (3, 3', 3") is k, 3k and 6k respectively. The complete gap width series, for a high number of spires, would be k, 3k, 6k, 10k, 15k, 21k, 28k..., or in other words, a width that grows in a substantially parabolic manner in accordance with the spire number, as seen in Figure 9.

For the gap (3) to grow in a substantially elliptic manner, the thread step (4b) of the male part (2) is constant whilst the thread step (4a, 4a', 4a") of the female part (1) follows a parabolic function with respect to the spire number. For example, the thread step of the female part (1) grows in such a way that the second thread is a constant value longer than the first; the third is twice as long as the second and so on. More specifically, if the thread step (4b) of the male part (2) is a constant value 'p', the thread steps (4a, 4a', 4a") of the female part (I) may be p+k, p+3k and p+6k respectively. Therefore, the width of the gaps (3, 3', 3 ") obtained is k, 4k and 10k respectively. The complete gap width series, for a high number of spires, would be k, 4k, 10k, 20k, 35k, 56k, 84k..., or in other words, a width that grows in a substantially elliptic manner in accordance with the spire number, as seen in Figure 9.

For the gap (3) to grow in a substantially n-grade polynomic manner, the thread step (4) of the male part (2) is constant whilst the thread step (4a, 4a', 4a") of the female part (1) follows a (n-1)-grade polynomic function with respect to the spire number. For example, for a gap (3, 3', 3") whose width grows according to a polynomial with a grade of 5, the thread step (4a, 4a', 4a") of the female part (1) must grow according to a polynomic function with a grade of 4. Looking at specific values as an example, if the thread step (4b) of the male part (2) is a constant value 'p', the thread steps (4a, 4a', 4a") of the female part (1) may be p+k, p+5k and p+15k respectively. Therefore, the width of the gaps (3, 3', 3") obtained is k, 6k and 21k respectively. The complete gap width series, for a high number of spires, would be k, 6k, 21k, 56k, 126k, 252k, 462k..., or in other words, a width that grows in a substantially 5-grade polynomic manner in accordance with the spire number, as seen in Figure 9.

Logically, the cases of parabolic growth and elliptic growth are specific cases of the n-prade polynomial growth, whereby n=2 and n=3 respectively.

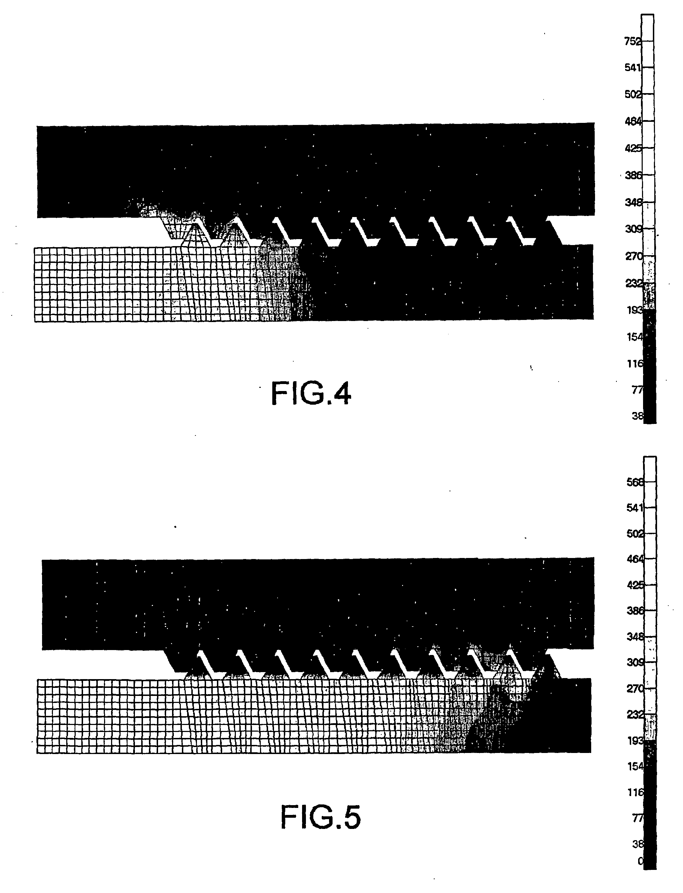

Figure 4 shows the stress distribution throughout the conventional threaded connection of Figure 1, indicating a scale of the stress values (MPa) different grey levels. As can be seen in the figure, the high stress levels (shaded almost in white) are concentrated in the first spires (left hand side of the Figure) of the male part (screw). Then, following a relatively abrupt transition (shown in different shades of grey) there are a large number of loosely tensed spires (in dark grey and black) located in the tip of the male part. The maximum stress value withstood by the male part is approximately 752 MPa.

Figure 5 shows the stress distribution throughout the threaded connection of Figure 2. In this case, the invention leads to several interesting effects. Firstly, all spires are uniformly stressed, which is appreciated because the transition between levels of grey is smoother than in Figure 4. Secondly, the maximum value or stress peak applied to the male part is reduced to a value of around 568 MPa. In other words, compared with the threaded connection in Figure 4, the maximum stress value applied to the male part (bottom part in this and other figures) is reduced by approximately 20%.

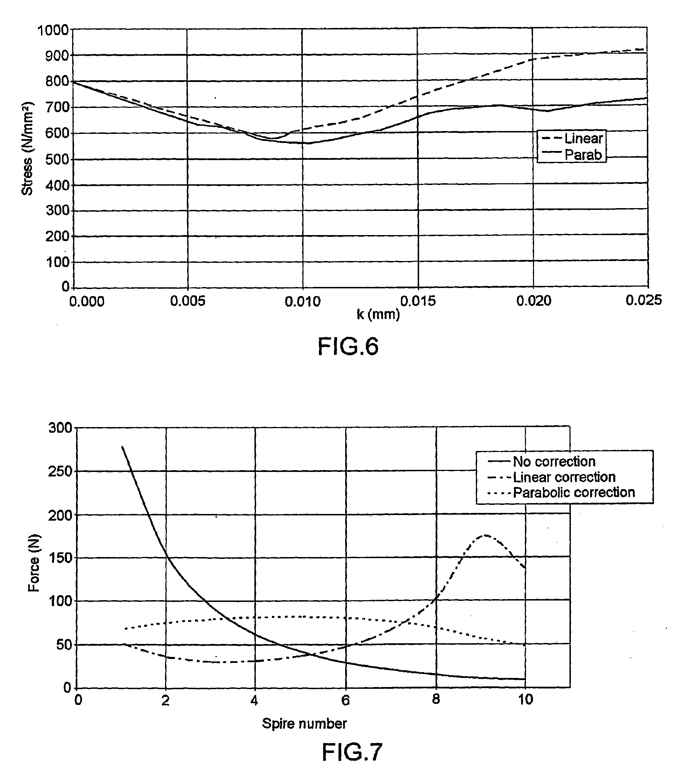

Figure 6 shows a graph that represents the maximum stress values withstood by the threaded connection (in N/mm²) with respect to the 'k'-parameter (in mm) described above, by means of which the growth of the thread step is parameterized. Two curves are displayed: a continuous curve related to a threaded connection with a parabolically-increasing gap according to the invention, and a dashed curve related to a threaded connection with a linearly-increasing gap in accordance with US3664540 or US2870668. Both connections aim to select the optimum 'k' value, which is that in which the maximum stress withstood by the threaded connection is minimum. It is also observed that the threaded connection with a parabolically-increasing gap generally presents lower maximum stress values than a threaded connection with a linearly-increasing gap, this difference being greater for larger 'k' values. Therefore, using a threaded connection according to the invention with an appropriate 'k' value, it is possible to obtain a significant reduction in the maximum stress compared with the connections in US3664540 and US2870668.

Figure 7 shows a graph of the distribution of contact forces (in N) withstood by each spire throughout the spires that make up the threaded connection (indicated by the spire number). Three curves are displayed: a continuous curve related to a conventional threaded connection without gaps; a dashed curve related to a conventional threaded connection with linearly-increasing gaps in accordance with US3664540 or US2870668; a dash-dot curve related to a threaded connection according to the invention with parabolically-increasing gaps. As shown in the figure, in the conventional threaded connection without a gap, the first spire absorbs an extremely high force (around 275 N), and the force rapidly decreases in the following spires. In the threaded connection with a linearly-increasing gap, the first spires receive a lower burden, and the maximum force is applied on the ninth and tenth spires, with a maximum value of around 175 N. However, in the threaded connection according to the invention, all spires are loaded in a uniform manner, which is beneficial because it reduces the risk of any of the spires breaking, which usually happens when some spires carry a much greater burden than others. Additionally, the maximum force value withstood is far lower than in the two conventional threaded connections; in fact, it is around 80 N, which corresponds to a reduction of 70% and 55% respectively compared with the two conventional threaded connections.

Figure 8 shows a table that represents the increasing gaps obtained according to several polynomic growth series: grade 1 (linear growth, known in prior art), 2 (parabolic growth), 3 (elliptic growth), 4, 5 and 6. Figure 9 shows the graphic representation of these gaps with respect to the spire number. This graphic representation helps observe the parabolic, elliptic, etc. growth of the gaps according to the invention.

The threaded connection of the present invention can be manufactured using any conventional applicable procedure such as mechanization, injection, lamination, etc., only taking into account that it must be possible to create a non-constant thread (which is considered perfectly achievable with any of these methods). The manufacturing procedure does not require special tools or a longer production time than the manufacturing procedure of a conventional threaded connection.

On another note, it must be pointed out that there are not any optimum thread step increase parameters. Optimum thread step parameters will depend on the thread dimensions, the thread material, the load to which the threaded connection is subjected, etc. Depending on the needs of each application, different optimum parameters will be calculated.

In a particularly beneficial way, the threaded connection according to the invention is applied to the connection between a dental implant and a connection screw of the dental implant, whereby the dental implant is the female part (1) and the screw is the male part (2). The part that is going to be connected to the dental implant shall normally be a pillar post, but it may also be any other prosthetic component, such as a cicatrisation pillar, an UCLA pillar, etc. In any case, the external connection according to the invention provides a more robust mechanical set (implant, screw and prosthetic component) compared to mechanical sets provided in conventional threaded connections. Therefore, the robustness of the set is increased without having to use different materials to those normally used and without having to increase the manufacturing cost of the different elements comprised in the mechanical set.

## Claims

1. Threaded connection between a female part (1) and a male part (2), whereby both parts (1, 2) comprise a thread profile made up of a series of spires, where the thread profile of at least one of the two parts (1, 2) has a variable thread step (4a, 4b) so that a growing gap (3) is created between both thread profiles, wherein the difference between the thread step of the parts (1, 2) is non-constant in accordance with the spire number and follows a (n-1)-grade polynomic function, in such a way that the gap (3) varies in a non-linear manner, according to a n-grade polynomic function, **characterized in that**:
- the difference between the thread step of parts (1, 2) follows a parabolic function (grade 2), in such a way that the gap (3) varies elliptically (grade 3).

2. Threaded connection, according to claim 1, **characterized in that** the male part (2) has a constant thread step (4b) and the female part (I) has a variable thread step (4a).

3. Threaded connection, according to claim 1, which is **characterized by** the fact that the male part (2) has a variable thread step (4b) and the female part (I) has a constant thread step (4a).

4. Use of a threaded connection according to any of the aforementioned claims in a connection between a dental implant and a connection screw for connecting another piece to the dental implant, whereby the dental implant is the female part (1) and the screw is the male part (2).

## Patentansprüche

1. Gewindeanschluss zwischen einem Mutterteil (1) und einem Vaterteil (2), wobei beide Teile (1, 2) ein Gewindeprofil umfassen, das aus einer Reihe von Windungen besteht, und das Gewindeprofil von mindestens einem der beiden Teile (1, 2) einen variablen Gewindeabsatz (4a, 4b) hat, so dass ein zunehmender Abstand (3) zwischen beiden Gewindeprofilen geschaffen wird, bei dem die Differenz zwischen dem Gewindeabsatz der Teile (1, 2) nicht konstant gegenüber der Zahl der Windungen ist und einer polynomischen Funktion von (n-1) Grad folgt, und zwar auf solche Weise, dass der Abstand (3) auf nicht lineare Weise variiert, entsprechend einer polynomischen Funktion von n Grad, **dadurch gekennzeichnet dass**:
- Die Differenz zwischen dem Gewindeabsatz der Teile (1, 2) einer parabolischen Funktion (Grad 2) folgt, und zwar auf solche Weise, dass der Abstand (3) elliptisch (Grad 3) variiert.

2. Gewindeanschluss gemäß Anspruch 1, **dadurch gekennzeichnet, dass** das Vaterteil (2) einen konstanten Gewindeabsatz (4b) und das Mutterteil (1) einen variablen Gewindeabsatz (4a) hat.

3. Gewindeanschluss gemäß Anspruch 1, durch die Tatsache gekennzeichnet, dass das Vaterteil (2) einen variablen Gewindeabsatz (4b) und das Mutterteil (1) einen konstanten Gewindeabsatz (4a) hat.

4. Verwendung eines Gewindeanschlusses gemäß irgendeinem der oben bezeichneten Ansprüche bei einer Verbindung zwischen einem Zahnimplantat und einer Verbindungsschraube für den Anschluss eines anderen Stückes am Zahnimplantat, wobei das Zahnimplantat das Mutterteil (1) und die Schraube das Valerteil (2) ist.

## Revendications

1. Connexion filetée entre une pièce femelle (1) et une pièce mâle (2), ou les deux pièces (1, 2) comprennent un profil fileté comportant plusieurs spires, où le profil fileté d'au moins l'une des deux pièces (1, 2) a un pas de filetage (4a, 4b) variable de telle sorte qu'un jeu (3) croissant est créé entre les deux profils filetés, où l'écart entre le pas de filetage des pièces (1, 2) est non-constant selon le nombre de spires et suit une fonction polynôme de degré n-1, de telle sorte que l'espace (3) varie d'une manière non linéaire, selon une fonction polynôme de degré *n*, **caractérisé par le fait que** :
- l'écart entre le pas de filetage des pièces (1, 2) suit une fonction parabolique (degré 2) de telle sorte que le jeu (3) varie elliptiquement (degré 3).

2. Connexion filetée, conformément à la revendication 1, **caractérisée par le fait que** la pièce mâle (2) a un pas de filetage (4b) constant et que la pièce femelle (1) a un pas de filetage (4a) variable.

3. Connexion filetée, conformément à la revendication 1, **caractérisée par le fait que** la pièce mâle (2) a un pas de filetage (4b) variable et que la pièce femelle (1) a un pas de filetage (4a) constant.

4. Utilisation d'une connexion filetée conformément à l'une des revendications 1 à 3 en une connexion entre un implant dentaire et une vis de connexion pour connecter une autre pièce à l'implant dentaire, où l'implant dentaire est la pièce femelle (1) et la vis est la pièce mâle (2).
